# EUROPEAN PATENT SPECIFICATION

(11) **EP 2 474 583 B1**
(45) Date of publication and mention of the grant of the patent: **04.01.2017**
(21) Application number: 10812018.9
(22) Date of filing: 27.08.2010
(51) Int. Cl.: C09D 201/00, C09D 5/08, C09D 7/12, C09D 163/00, G02B 5/08, C09D 201/02

(54) **BACK COATING COMPOSITION AND MIRROR**
RÜCKSEITENBESCHICHTUNGSZUSAMMENSETZUNG UND SPIEGEL DAMIT
COMPOSITION DE REVÊTEMENT D'ENVERS, ET MIROIR

(30) Priority: 31.08.2009 JP 2009200360
(43) Date of publication of application: 11.07.2012
(73) Proprietor: Asahi Glass Company, Limited, Tokyo 100-8405 (JP)
(72) Inventor: ABE, Keisuke, Tokyo 100-8405 (JP); KATO, Akemi, Tokyo 100-8405 (JP)
(74) Representative: Müller-Boré & Partner Patentanwälte PartG mbB
(86) International application number: PCT/JP2010/064634
(87) International publication number: WO 2011/024969

(56) References cited:
- WO-A1-01/74499
- JP-A- 3 075 007
- JP-A- 5 161 531
- JP-A- 7 234 306
- JP-A- 2000 191 978
- JP-A- 2005 307 179
- JP-A- 2006 028 462
- JP-A- 2007 056 054
- US-A- 5 519 542

## Description

The present invention relates to a back coating composition for forming a back coating film on the back side of a mirror, and a mirror having a back coating film formed on its back side.

In a mirror having a silver mirror film formed on a glass substrate, a copper protective film is formed on the silver mirror film to prevent corrosion of the silver mirror film, and further, a back coating film is formed on the copper protective film.

A back coating composition for forming a back coating film usually comprises a thermosetting resin (such as an epoxy resin or an alkyd resin) and a pigment (such as an extender pigment or an anti-corrosive pigment) (Patent Documents 1 to 4).

However, by a conventional back coating film, erosion by an acid was not sufficiently prevented, and in the case of a mirror installed in a bathroom, a restroom, a lavatory, etc., the silver mirror film was likely to be corroded by a reagent having a strong acidity. Therefore, for such a mirror to be installed in a bathroom, a restroom, a lavatory, etc., it is desired to develop a back coating composition capable of forming a back coating film which is scarcely susceptible to acid erosion.
Patent Document 1: JP-A-7-234306
Patent Document 2: US Patent No. 6750300
Patent Document 3: US Patent No. 5,519,542
Patent Document 4: JP2005307179 A

The present invention is to provide a back coating composition capable of forming a back coating film which is scarcely susceptible to acid erosion, and a mirror excellent in acid resistance.

The back coating composition of the present invention is a back coating composition for forming a back coating film on the back side of a mirror, which comprises a thermosetting resin, a pigment and a dispersant, wherein as the dispersant, an amino group-containing polymer having an amine value of at least 20 mgKOH/g and having no acid group, is contained, and wherein as the thermosetting resin, an epoxy resin is contained, and further, as a curing agent for the epoxy resin, an amine-type curing agent is contained.

It is preferred that as the dispersant, an amino group-containing polymer having an amine value of from 20 mgKOH/g to 70 mgKOH/g and having no acid group, is contained.

It is preferred that as the dispersant, an amino group-containing polymer having an amine value of from 20 mgKOH/g to 70 mgKOH/g and having no acid group, is contained in an amount of from 20 to 100 mass%.

It is preferred that in the solid content of the back coating composition obtainable by excluding a solvent from the back coating composition, the proportion of the thermosetting resin is from 30 to 50 mass%, the proportion of the pigment is from 50 to 70 mass%, and the proportion of the dispersant is from 1 to 13 mass%.

It is preferred that as the pigment, an extender pigment is contained.

It is preferred that as the pigment, an anti-corrosive pigment is contained.

The mirror of the present invention comprises a glass substrate, a metal film formed on the glass substrate, and a back coating film formed on the metal film by using the back coating composition of the present invention.

It is preferred that the metal film consists of a silver mirror film formed on the glass substrate and a metal protective film formed on the silver mirror film.

The metal film may be a silver mirror film formed on the glass substrate.

The mirror of the present invention is a mirror comprising a glass substrate, a metal film formed on the glass substrate, and a back coating film formed on the metal film, characterized in that after the mirror is immersed in 10 mass% hydrochloric acid at 20°C for 48 hours, peeling of the metal film from a cut surface is at most 5 mm.

According to the back coating composition of the present invention, it is possible to form a back coating film which is scarcely susceptible to acid erosion.

The mirror of the present invention is excellent in acid resistance.
Fig. 1 is a cross-sectional view showing a first embodiment of the mirror of the present invention.
Fig. 2 is a cross-sectional view showing a second embodiment of the mirror of the present invention.

### <Back coating composition>

The back coating composition of the present invention is a back coating composition for forming a back coating film on the back side of a mirror, which comprises a thermosetting resin, a pigment and a dispersant and which may contain a solvent, other additives, other resins, etc., as the case requires.

### (Thermosetting resin)

The thermosetting resin is an epoxy resin. An epoxy resin is scarcely susceptible to acid erosion when formed into a back coating film.

The epoxy resin may, for example, be a bisphenol A-type epoxy resin, a bisphenol F-type epoxy resin, a novolac type epoxy resin, an amino-modified epoxy resin (JP-A-3-75006) or an esterified bisphenol type epoxy resin (JP-A-5-161531), and from the viewpoint of the corrosion resistance and durability, a bisphenol A-type epoxy resin is particularly preferred.

An epoxy resin is used as the thermosetting resin, and a curing agent is used in combination. As such a curing agent, an amine type curing agent is used.

The amine type curing agent may, for example, be an aliphatic amine type curing agent, an alicyclic type curing agent, an aromatic amine type curing agent, a dicyane diamide type curing agent, a polyamide amine type curing agent or an organic acid dihydrazide, and from the viewpoint of the latent nature and quick curability by heating, dicyane diamide, an organic acid dihydrazide or a polyamide amine type curing agent is preferred, and dicyane diamide or an organic acid dihydrazide is particularly preferred.

A curing accelerator (curing catalyst) may be used in combination. The curing accelerator may, for example, be a tertiary amine type curing accelerator, an imidazole type curing accelerator, an onium salt type curing accelerator, a urea type curing accelerator or an organic tin compound, and from such a viewpoint that the temperature required for the curing can be made low, an imidazole type curing accelerator, an urea type curing accelerator or an organic tin compound is preferred.

A reactive diluent may be added for the purpose of adjusting e.g. the viscosity of the back coating composition. As such a reactive diluent, an epoxy compound having a relatively low molecular weight such as glycidyl ether may be mentioned.

### (Pigment)

The pigment may, for example, be an extender pigment, an anticorrosive pigment or a coloring pigment. The back coating composition of the present invention preferably contains an extender pigment as at least a part of the pigment, since it is thereby possible to impart properties necessary for the coating film. Further, the back coating composition of the present invention preferably contains an anti-corrosive pigment as at least a part of the pigment, with a view to effectively protecting the metal film as the mirror surface.

The extender pigment may, for example, be talc, barium sulfate, mica or calcium carbonate.

The anti-corrosive pigment may, for example, be zinc cyanamide, zinc oxide, zinc phosphate, calcium magnesium phosphate, zinc molybdate, barium borate or zinc calcium cyanamide.

The coloring pigment may, for example, be titanium oxide, carbon black or iron oxide.

### (Dispersant)

The dispersant may, for example, be a dispersant for a pigment. The back coating composition of the present invention is characterized in that it contains, as at least a part of the dispersant, an amino group-containing polymer (hereinafter referred to as the specific amino group-containing polymer) having an amine value of at least 20 mgKOH/g and having no acid group.

Having no acid group means not having an acid group such as a carboxy group or a phosphoric acid group in the molecule, and having no acid group can be confirmed by the presence or absence of an acid value.

As the amino group, a tertiary amino group is preferred.

The amine value of the specific amino group-containing polymer is at least 20 mgKOH/g, preferably from 40 to 70 mgKOH/g. When the polymer has an amine value of from 20 mgKOH/g to 70 mgKOH/g and has no acid group, it is possible to form a back coating film which is scarcely susceptible to acid erosion.

The reason as to why the specific amino group-containing polymer in the present invention preferably has no acid group, is as follows.

A dispersant is usually used for the purpose of improving the dispersability of a pigment, etc., and the dispersant is required to have a specific absorption activity to a pigment. Accordingly, as the dispersant, one having both an acid group and an amino group is widely known. On the other hand, the dispersant (the specific amino group-containing polymer) in the present invention also has a function as a curing catalyst for the thermosetting resin (particularly for an epoxy resin) in addition to the function for adsorption to the pigment and for improvement of the affinity to the thermosetting resin. The specific amino group-containing polymer in the present invention has no acid group and is preferred from such a viewpoint that it promotes curing of the thermosetting resin.

As the specific amino group-containing polymer, for example, the following dispersants manufactured by BYK may be mentioned. The respective amine values are as shown in brackets.
DISPERBYK (registered trademark)-116 (amine value: 65 mgKOH/g, acid value: 0 mgKOH/g, acrylic copolymer),
DISPERBYK (registered trademark)-2155 (amine value: 48 mgKOH/g, acid value: 0 mgKOH/g, block copolymer),
DISPERBYK (registered trademark)-9077 (amine value: 48 mgKOH/g, acid value: 0 mgKOH/g, high molecular weight copolymer), etc.
As the dispersant, another dispersant may be used in combination with the specific amino group-containing polymer. As such another dispersant, for example, the following dispersants manufactured by BYK may be mentioned.
DISPERBYK (registered trademark)-167 (amine value: 13 mgKOH/g, acid value: 0 mgKOH/g, block copolymer),
DISPERBYK (registered trademark)-163 (amine value: 10 mgKOH/g, acid value: 0 mgKOH/g, block copolymer),
DISPERBYK (registered trademark)-164 (amine value: 18 mgKOH/g, acid value: 0 mgKOH/g, block copolymer),
DISPERBYK (registered trademark)-110 (amine value: 0 mgKOH/g, acid value: 53 mgKOH/g, copolymer having acid groups),
DISPERBYK (registered trademark)-106 (amine value: 74 mgKOH/g, acid value: 132 mgKOH/g, polymer salt having acid groups),
DISPERBYK (registered trademark)-2163 (amine value: 10 mgKOH/g, acid value: 0 mgKOH/g, block copolymer),
DISPERBYK (registered trademark)-2164 (amine value: 14 mgKOH/g, acid value: 0 mgKOH/g, block copolymer), etc.

The amine value is a value which is measured by JIS K7237.

The acid value is a value which is measured by JIS K2501.

### (Solvent)

The back coating composition may contain a solvent which is capable of dissolving or dispersing the thermosetting resin or the pigment. The solvent may, for example, be an aromatic hydrocarbon, an aliphatic hydrocarbon, an ester, an ether, a ketone or an alcohol.

### (Other additives)

The back coating composition may contain other additives in addition to the dispersant. The additives may, for example, be a reinforcing material, a thickening agent, a rust-proofing agent, an antisettling agent, a defoaming agent, a surfactant, a rheology controlling agent, etc.

### (Other resins)

The back coating composition may contain other resins in addition to a thermosetting resin. Such other resins may, for example, be a polyester, an acrylic resin, a styrene type resin, a vinyl type resin, a ketone resin, rosin, etc.

### (Composition ratio)

The solid content concentration of the back coating composition is preferably from 60 to 100 mass%, more preferably from 70 to 90 mass%. If it is less than 60 mass%, there may be a case where no adequate film thickness is obtainable.

The solid content of the back coating composition means components which are obtainable by excluding a solvent from the back coating composition and include the thermosetting resin and other resins.

In the solid content of the back coating composition, the proportion of the thermosetting resin (including the curing agent, the curing accelerator and the reactive diluent) is preferably from 30 to 50 mass%, more preferably from 35 to 45 mass%. If it is less than 30 mass%, the film-forming property tends to be poor, and there may be a case where no adequate hardness and adhesion of the film are obtainable. If it exceeds 50 mass%, the amount of a functional pigment such as an anti-corrosive pigment becomes small, and the acid resistance, etc. of the film are likely to be inadequate.

The proportion of the pigment in the solid content of the back coating composition is preferably from 50 to 70 mass%, more preferably from 52 to 68 mass%. If it is less than 50 mass%, the acid resistance, etc. of the film are likely to be inadequate. If it exceeds 70 mass%, the resin component in a film-forming component decreases, and there may be a case where no adequate hardness and adhesion of the film are obtainable.

The proportion of the dispersant in the solid content of the back coating composition is preferably from 1 to 13 mass%, more preferably from 2 to 11 mass%. If it is less than 1 mass%, there may be a case where no adequate effect of the dispersant is obtainable. If it exceeds 13 mass%, crosslinking of the dispersant itself is likely to proceed, and there may be a case where the flowability of the coating composition deteriorates.

In the pigment, the proportion of the extender pigment is preferably from 48 to 68 mass%, more preferably from 53 to 63 mass%. If it is less than 48 mass%, the flowability of the coating composition is likely to deteriorate. If it exceeds 68 mass%, the other anti-corrosive pigment decreases, and the acid resistance, etc. of the film are likely to be inadequate.

In the pigment, the proportion of the anti-corrosive pigment is preferably from 24 to 44 mass%, more preferably from 29 to 39 mass%. If it is less than 24 mass%, no adequate anti-corrosive effect is likely to be obtainable. If it exceeds 44 mass%, the flowability of the coating composition is likely to deteriorate.

In the dispersant, the proportion of the specific amino group-containing polymer is preferably from 20 to 100 mass%, more preferably from 30 to 90 mass%. If it is less than 20 mass%, there may be a case where no adequate effect is obtainable as a curing catalyst for the thermosetting resin.

In this specification, an expression " to " is meant for including the numerical values before and after "to " as the lower limit value and the upper limit value, unless otherwise specified.

The back coating composition of the present invention as describe above, contains, as a dispersant, an amino group-containing polymer having an amine value of at least 20 mgKOH/g and having no acid group, whereby it is possible to form a back coating film which is scarcely susceptible to acid erosion.

### <Mirror>

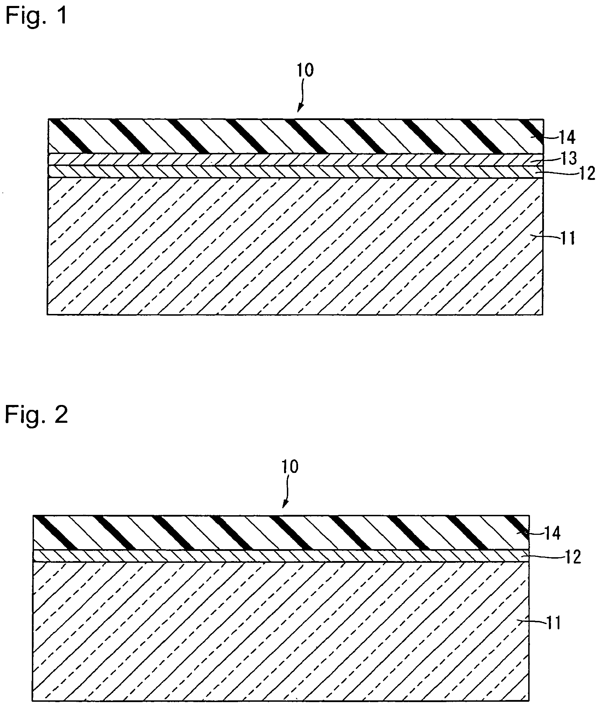

Fig. 1 is a cross-sectional view showing a first embodiment of the mirror of the present invention. A mirror 10 comprises a glass substrate 11, a silver mirror film 12 (metal film) formed on the glass substrate 11, a metal protective film 13 (metal film) formed on the silver mirror film 12, and a back coating film 14 formed on the metal protective film 13.

Fig. 2 is a cross-sectional view showing a second embodiment of the mirror of the present invention. A mirror 10 comprises a glass substrate 11, a silver mirror film 12 (metal film) formed on the glass substrate 11, and a back coating film 14 formed on the silver mirror film 12.

### (Glass substrate)

As the glass substrate, known glass for a mirror may be employed, and for example, soda lime glass may be mentioned.

### (Silver mirror film)

A method for forming the silver mirror film may, for example, be an electroless plating method, a vacuum vapor deposition method or a sputtering method.

The thickness of the silver mirror film is preferably such a thickness that the silver mirror film becomes within a range of from 0.5 to 2 g/m².

### (Metal protective film)

The metal protective film is a film made of a metal to be formed for preventing corrosion of the silver mirror film. The metal protective film may be a metal protective film made of copper, a copper alloy, nickel, a nickel alloy, tin, a tin alloy, or the like, and it is usually a copper protective film.

As a method for forming the metal protective film, an electroless plating method may, for example, be mentioned.

The thickness of the metal protective film is preferably such a thickness that the metal protective film becomes within a range of from 0.1 to 1 g/m².

The mirror of the present invention may have a metal protective film of two or more layers made of different metals.

Further, the mirror of the present invention has a back coating film which is formed by using the back coating composition of the present invention and which is scarcely susceptible to acid erosion, whereby as shown in Fig. 2, it may not have a metal protective film.

### (Back coating film)

The back coating film is a film to be formed for preventing corrosion of the silver mirror film and the metal protective film and for improving the mechanical durability thereof.

The back coating film is formed by applying the back coating composition of the present invention on the surface of a metal film (a silver mirror film or a metal protective film), followed by thermal curing.

The application of the back coating composition can be carried out by means of a brush, a roller, a spray, a flow coater, an applicator or the like.

The amount of the back coating composition to be applied is to be adjusted so that the film thickness after drying will be from 30 to 100 µm.

The temperature at the time of thermal curing of the back coating composition is usually from room temperature to 250°C.

The mirror of the present invention as described above, has a back coating film which is formed by using the back coating composition of the present invention and which is scarcely susceptible to acid erosion, whereby it is excellent in acid resistance. Specifically, it has such acid resistance that after the mirror of the present invention which was cut, is immersed in 10 mass% hydrochloric acid (first grade reagent) at 20°C for 48 hours, peeling of the metal film from the cut surface is at most 5 mm.

### EXAMPLES

Now, Examples will be described.

Examples 2 to 10, 12, 18, 20, 22, 24, 28 and 30 are Working Examples of the present invention, and Examples 1, 11, 13 to 17, 19, 21, 23, 25 to 27, 29, 31 and 32 are Comparative Examples.

### EXAMPLE 1

In the composition ratio as shown in the column for Example 1 in Table 1, the respective materials were introduced into a paint shaker and shaken for 15 minutes to prepare a back coating composition.

On the surface of a sufficiently cleaned glass substrate (size: 90 mm × 40 mm × 5 mm), a silver plating solution comprising a solution containing silver nitrate and a reducing liquid to reduce silver, was sprayed to precipitate silver by a silver mirror reaction thereby to form a silver mirror film having a thickness of 1.0 g/m².

The surface of the silver mirror film was washed with water, and then, on the surface, a copper plating solution comprising a solution containing copper sulfate and a reducing liquid to reduce copper, was sprayed to precipitate copper by an electroless plating method thereby to form a copper protective film having a thickness of 0.3 g/m².

The surface of the copper protective film was washed with water and dried, and then, the temperature of the glass substrate was adjusted to room temperature.

On the surface of the copper protective film, the above back coating composition was applied by a flow coating method so that the dried film thickness would be 55 µm, and heated in a drying furnace for 3 minutes so that the temperature of the glass substrate became 135°C, to form the back coating film thereby to obtain a mirror (having the copper protective film).

On the surface of a sufficiently cleaned glass substrate (size: 90 mm × 40 mm × 5 mm), a silver plating solution comprising a solution containing silver nitrate and a reducing liquid to reduce silver, was sprayed to precipitate silver by a silver mirror reaction thereby to form a silver mirror film having a thickness of 1.0 g/m².

The surface of the silver mirror film was washed with water and dried, and then, the temperature of the glass substrate was adjusted to room temperature.

On the surface of the silver mirror film, the above back coating composition was applied by a flow coating method so that the dried film thickness would be 55 µm, and heated for 3 minutes in a drying furnace so that the temperature of the glass substrate became 135°C, to form a back coating film thereby to obtain a mirror (having no copper protective film).

### EXAMPLES 2 TO 16

In the composition ratio shown in each of columns for Examples 2 to 16 in Tables 1 to 3, the respective materials were prepared, and a back coating composition having the composition ratio shown in each column was prepared.

Mirrors (one having a copper protective film and one having no copper protective film) were obtained in the same manner as in Example 1 except that the back coating composition was changed.

### EXAMPLES 17 TO 32

In the compositional ratio shown in each of columns for Examples 17 to 32 in Tables 4 to 6, the respective materials were prepared, and a back coating composition having the composition ratio shown in each column was prepared.

Mirrors (one having a copper protective film and one having no copper protective film) were obtained in the same manner as in Example 1 except that the back coating composition was changed.

The results of evaluation of viscosities of the back coating compositions in Examples 1 to 32, the results of performance tests by the following hydrochloric acid tests (1) and (2) with respect to mirrors obtained by using the back coating compositions in Examples 1 to 32, and the results of evaluation of the appearance of the coating films prepared by the back coating compositions, are shown in Tables 1 to 6.

### (Hydrochloric acid test (1))

A mirror having a size of 90 mm × 40 mm was cut into two to obtain mirrors having a size of 45 mm × 40 mm. The cut mirror was immersed in 0.5 mass% hydrochloric acid (first grade reagent) at 20°C for 48 hours, whereupon it was taken out and evaluated by the following standards. The results are shown in Tables 1 to 3.
Pass: No abnormality is observed on the silver mirror film, and peeling of the film by erosion from the cut surface is at most 5 mm.
Fail: Abnormality is observed on the silver mirror film, or peeling of the film by erosion from the cut surface exceeds 5 mm.

### (Hydrochloric acid test (2))

A mirror having a size of 90 mm × 40 mm was cut into two to obtain mirrors having a size of 45 mm × 40 mm. The cut mirror was immersed in 10 mass% hydrochloric acid (first grade reagent) at 20°C for 48 hours, then taken out and evaluated by the following standards. The results are shown in Tables 1 to 3.
Pass: No abnormality is observed on the silver mirror film, and peeling of the film by erosion from the cut surface is at most 5 mm.
Fail: Abnormality is observed on the silver mirror film, or peeling of the film by erosion from the cut surface exceeds 5 mm.

**TABLE 1**

| Examples | | | 1 | 2 | 3 | 4 | 5 | 6 |
|---|---|---|---|---|---|---|---|---|
| | Solvent | MIBK | 16.8 | 14.3 | 14.3 | 14.2 | 14.3 | 14.3 |
| | Epoxy resin | jER828 | 26.7 | 26.3 | 26.1 | 25.5 | 26.3 | 26.1 |
| | Curing agent | DICY | 3.2 | 3.0 | 2.8 | 2.6 | 3.0 | 2.8 |
| | Reactive diluent | DY-T | 1.4 | 1.2 | 1.2 | 1.1 | 1.2 | 1.2 |
| | Curing accelerator | DBTDL | 0.1 | 0.1 | 0.1 | 0.1 | 0.1 | 0.1 |
| | | UR500 | 1.5 | 1.3 | 1.3 | 1.2 | 1.3 | 1.3 |
| | Dispersant* | BYK167 (13/0) | 2.0 | 2.0 | 1.9 | 1.8 | 2.0 | 1.9 |
| | | BYK116 (65/0) | | 3.3 | 3.3 | 3.3 | 3.3 | 3.3 |
| | | BYK2163 (10/0) | | 1.1 | 2.1 | 4.2 | | |
| Composition ratio (mass%) | | BYK2164 (14/0) | | | | | 1.1 | 2.1 |
| | | BYK2155 (48/0) | | | | | | |
| | | BYK163 (10/0) | | | | | | |
| | | BYK164 (18/0) | | | | | | |
| | | BYK110 (0/53) | | | | | | |
| | | BYK106 (74/132) | | | | | | |
| | Anti-corrosive pigment | Zinc calcium cyanamide | 16.6 | 16.3 | 16.1 | 15.8 | 16.3 | 16.1 |
| | Extender pigment | Talc | 16.2 | 15.9 | 15.6 | 15.4 | 15.9 | 15.6 |
| | | Barium sulfate | 12.1 | 11.8 | 11.8 | 11.6 | 11.8 | 11.8 |
| | Coloring pigment | Titanium oxide | 3.1 | 3.1 | 3.1 | 3.0 | 3.1 | 3.1 |
| | | Carbon black | 0.3 | 0.3 | 0.3 | 0.2 | 0.3 | 0.3 |
| | Sum | | 100 | 100 | 100 | 100 | 100 | 100 |
| Solid content concentration (mass%) | | | 83 | 86 | 86 | 86 | 86 | 86 |
| Thermosetting resin in solid content (mass%) | | | 40 | 37 | 37 | 36 | 37 | 37 |
| Pigment in solid content (mass%) | | | 58 | 55 | 55 | 54 | 55 | 55 |
| Dispersant in solid content (mass%) | | | 2 | 7 | 9 | 11 | 7 | 9 |
| Evaluation | Hydrochloric acid test (1) | Copper protective film present | Fail | Pass | Pass | Pass | Pass | Pass |
| | | No copper protective film | Fail | Pass | Pass | Pass | Pass | Pass |
| | Hydrochloric acid test (2) | Copper protective film present | Fail | Pass | Pass | Pass | Pass | Pass |
| | | No copper protective film | Fail | Pass | Pass | Pass | Pass | Pass |

| | | | | | | | | |
|---|---|---|---|---|---|---|---|---|
| *: The numerical values in brackets after an abbreviation of the dispersant are the amine value on the left hand side and the acid value on the right hand side. | | | | | | | | |

**TABLE 2**

| Examples | | | 7 | 8 | 9 | 10 | 11 | 12 |
|---|---|---|---|---|---|---|---|---|
| | Solvent | MIBK | 14.2 | 14.3 | 14.3 | 14.2 | 17.1 | 16.4 |
| | Epoxy resin | jER828 | 25.5 | 26.3 | 26.1 | 25.5 | 27 | 26.3 |
| | Curing agent | DICY | 2.6 | 3.0 | 2.8 | 2.6 | 3.3 | 3.0 |
| | Reactive diluent | DY-T | 1.1 | 1.2 | 1.2 | 1.1 | 1.5 | 1.3 |
| | Curing accelerator | DBTDL | 0.1 | 0.1 | 0.1 | 0.1 | 0.2 | 0.1 |
| | | UR500 | 1.2 | 1.3 | 1.3 | 1.2 | 1.7 | 1.4 |
| | | BYK167 (13/0) | 1.8 | 2.0 | 1.9 | 1.8 | 0.0 | 2.0 |
| | | BYK116 (65/0) | 3.3 | 3.3 | 3.3 | 3.3 | | 2.2 |
| Composition ratio (mass%) | | BYK2163 (10/0) | | | | | | |
| | | BYK2164 (14/0) | 4.2 | | | | | |
| | Dispersant | BYK2155 (48/0) | | 1.1 | 2.1 | 4.2 | | |
| | | BYK163 (10/0) | | | | | | |
| | | BYK164 (18/0) | | | | | | |
| | | BYK110 (0/53) | | | | | | |
| | | BYK106 (74/132) | | | | | | |
| | Anti-corrosive pigment | Zinc calcium cyanamide | 15.8 | 16.3 | 16.1 | 15.8 | 16.8 | 16.3 |
| | Extender pigment | Talc | 15.4 | 15.9 | 15.6 | 15.4 | 16.5 | 15.9 |
| | | Barium sulfate | 11.6 | 11.8 | 11.8 | 11.6 | 12.3 | 11.8 |
| | Coloring pigment | Titanium oxide | 3.0 | 3.1 | 3.1 | 3.0 | 3.2 | 3.0 |
| | | Carbon black | 0.2 | 0.3 | 0.3 | 0.2 | 0.4 | 0.3 |
| | Sum | | 100 | 100 | 100 | 100 | 100 | 100 |
| Solid content concentration (mass%) | | | 86 | 86 | 86 | 86 | 83 | 84 |
| Thermosetting resin in solid content (mass%) | | | 36 | 37 | 37 | 36 | 41 | 38 |
| Pigment in solid content (mass%) | | | 54 | 55 | 55 | 54 | 59 | 57 |
| Dispersant in solid content (mass%) | | | 11 | 7 | 9 | 11 | 0 | 5 |
| Evaluation | Hydrochloric acid test (1) | Copper protective film present | Pass | Pass | Pass | Pass | Fail | Pass |
| | | No copper protective film | Pass | Pass | Pass | Pass | Fail | Pass |
| | Hydrochloric acid test (2) | Copper protective film present | Pass | Pass | Pass | Pass | Fail | Pass |
| | | No copper protective film | Pass | Pass | Pass | Pass | Fail | Pass |

| | | | | | | | | |
|---|---|---|---|---|---|---|---|---|
| *: The numerical values in brackets after an abbreviation of the dispersant are the amine value on the left hand side and the acid value on the right hand side. | | | | | | | | |

**TABLE 3**

| Examples | | | 13 | 14 | 15 | 16 |
|---|---|---|---|---|---|---|
| | Solvent | MIBK | 16.4 | 16.4 | 16.4 | 16.4 |
| | Epoxy resin | jER828 | 26.3 | 26.3 | 26.3 | 26.3 |
| | Curing agent | DICY | 3.0 | 3.0 | 3.0 | 3.0 |
| | Reactive diluent | DY-T | 1.3 | 1.3 | 1.3 | 1.3 |
| | Curing accelerator | DBTDL | 0.1 | 0.1 | 0.1 | 0.1 |
| | | UR500 | 1.4 | 1.4 | 1.4 | 1.4 |
| | | BYK167 (13/0) | 2.0 | 2.0 | 2.0 | 2.0 |
| | | BYK116 (65/0) | | | | |
| | | BYK2163 (10/0) | | | | |
| Composition ratio (mass%) | | BYK2164 (14/0) | | | | |
| | Dispersant* | BYK2155 (48/0) | | | | |
| | | BYK163 (10/0) | 2.2 | | | |
| | | BYK164 (18/0) | | 2.2 | | |
| | | BYK110 (0/53) | | | 2.2 | |
| | | BYK106 (74/132) | | | | 2.2 |
| | Anti-corrosive pigment | Zinc calcium cyanamide | 16.3 | 16.3 | 16.3 | 16.3 |
| | Extender pigment | Talc | 15.9 | 15.9 | 15.9 | 15.9 |
| | | Barium sulfate | 11.8 | 11.8 | 11.8 | 11.8 |
| | Coloring pigment | Titanium oxide | 3.0 | 3.0 | 3.0 | 3.0 |
| | | Carbon black | 0.3 | 0.3 | 0.3 | 0.3 |
| | Sum | | 100 | 100 | 100 | 100 |
| Solid content concentration (mass%) | | | 84 | 84 | 84 | 84 |
| Thermosetting resin in solid content (mass%) | | | 38 | 38 | 38 | 38 |
| Pigment in solid content (mass%) | | | 57 | 57 | 57 | 57 |
| Dispersant in solid content (mass%) | | | 5 | 5 | 5 | 5 |
| Evaluation | Hydrochloric acid test (1) | Copper protective film present | Pass | Pass | Pass | Fail |
| | | No copper protective film | Pass | Pass | Pass | Fail |
| | Hydrochloric acid test (2) | Copper protective film present | Fail | Fail | Fail | Fail |
| | | No copper protective film | Fail | Fail | Fail | Fail |

| | | | | | | |
|---|---|---|---|---|---|---|
| *: The numerical values in brackets after an abbreviation of the dispersant are the amine value on the left hand side and the acid value on the right hand side. | | | | | | |

**TABLE 4**

| Examples | | | 17 | 18 | 19 | 20 | 21 | 22 |
|---|---|---|---|---|---|---|---|---|
| | Solvent | MIBK | 17.2 | 15 | 15 | 15 | 20.2 | 14.9 |
| | Epoxy resin | jER828 | 27.3 | 27.5 | 27.5 | 27.5 | 26.3 | 27.5 |
| | Curing agent | SDH | 3.3 | 3.1 | 3 | 3.1 | | |
| | | ADH | | | | | 1.7 | 1.8 |
| | Reactive diluent | DY-T | 1.4 | 1.3 | 1.3 | 1.3 | 1.4 | 1.3 |
| | Curing accelerator | DBTDL | 0.1 | 0.1 | 0.1 | 0.1 | | |
| | | UR500 | 1.5 | 1.4 | 1.4 | 1.4 | 1.5 | 1.4 |
| | | 2E4MZ | | | | | 1.5 | 1.6 |
| Composition ratio (mass%) | | IBMI-12 | | | | | | |
| | Dispersant* | BYK116 (65/0) | | 2.1 | | | | 2.1 |
| | | BYK2163 (10/0) | | | 2.1 | | | |
| | | BYK2155 (48/0) | | | | 2.1 | | |
| | | BYK110 (0/53) | | | | | | |
| | | BYK106 (74/132) | | | | | | |
| | Anti-corrosive pigment | Zinc calcium cyanamide | 16.9 | 17.1 | 17 | 17.1 | 16.3 | 17 |
| | Extender pigment | Talc | 16.5 | 16.6 | 16.5 | 16.6 | 15.9 | 16.6 |
| | | Barium sulfate | 12.3 | 12.3 | 12.5 | 12.3 | 11.9 | 12.3 |
| | Coloring pigment | Titanium oxide | 3.2 | 3.2 | 3.3 | 3.2 | 3 | 3.2 |
| | | Carbon black | 0.3 | 0.3 | 0.3 | 0.3 | 0.3 | 0.3 |
| | Sum | | 100 | 100 | 100 | 100 | 100 | 100 |
| Solid content concentration (mass%) | | | 83 | 85 | 85 | 85 | 80 | 85 |
| Thermosetting resin in solid content (mass%) | | | 35 | 34 | 34 | 34 | 35 | 34 |
| Pigment in solid content (mass%) | | | 59 | 58 | 58 | 58 | 60 | 58 |
| Dispersant in solid content (mass%) | | | 0 | 3 | 3 | 3 | 0 | 2 |
| Evaluation | Viscosity (*1) | | Good | Good | Good | Good | No good | Good |
| | Appearance of coating film (*2) | | No Good | Good | Good | Good | Good | Good |
| | Hydrochloric acid test (1) | No copper protective film | Pass | Pass | Fail | Pass | Pass | Pass |
| | Hydrochloric acid test (2) | No copper protective film | Fail | Pass | Fail | Pass | Fail | Pass |

| | | | | | | | | |
|---|---|---|---|---|---|---|---|---|
| *: The numerical values in brackets after an abbreviation of the dispersant are the amine value on the left hand side and the acid value on the right hand side. *1: With respect to the viscosity, a case where the viscosity rapidly increases in one hour after the preparation was judged to be "no good". *2: With respect to the appearance of coating film, one with remarkable surface roughness, or one having a local thickness non-uniformity was judged to be "no good". | | | | | | | | |

### (Hydrochloric acid test (1))

The mirror was immersed in 0.5 mass% hydrochloric acid (first grade reagent) at 20°C for 48 hours, then taken out and evaluated by the following standards.
Pass: No abnormality is observed on the silver mirror film, and peeling of the film by erosion from the cut surface is at most 5 mm.
Fail: Abnormality is observed on the silver mirror film, or peeling of the film by erosion from the cut surface exceeds 5 mm.

### (Hydrochloric acid test (2))

The mirror was immersed in 10 mass% hydrochloric acid (first grade reagent) at 20°C for 48 hours, then taken out and evaluated by the following standards.
Pass: No abnormality is observed on the silver mirror film, and peeling of the film by erosion from the cut surface is at most 5 mm.
Fail: Abnormality is observed on the silver mirror film, or peeling of the film by erosion from the cut surface exceeds 5 mm.

**TABLE 5**

| Examples | | | 23 | 24 | 25 | 26 | 27 | 28 |
|---|---|---|---|---|---|---|---|---|
| | Solvent | MIBK | 15.1 | 14.9 | 20.2 | 15.1 | 20.2 | 14.9 |
| | Epoxy resin | jER828 | 27.4 | 27.4 | 25.7 | 27.4 | 26.3 | 27.5 |
| | Curing agent | SDH | | | | | | |
| | | ADH | 1.8 | 1.8 | 1.7 | 1.8 | 1.7 | 1.8 |
| | Reactive diluent | DY-T | 1.3 | 1.6 | 1.2 | 1.3 | 1.4 | 1.3 |
| | Curing accelerator | DBTDL | | | | | | |
| | | UR500 | 1.4 | 1.4 | 1.3 | 1.4 | 1.5 | 1.4 |
| | | 2E4MZ | 1.6 | 1.6 | 1.5 | 1.6 | | |
| Composition ratio (mass%) | | IBMI-12 | | | | | 1.5 | 1.6 |
| | Dispersant* | BYK116 (65/0) | | | | | | 2.1 |
| | | BYK2163(10/0) | 2.1 | | | | | |
| | | BYK2155 (48/0) | | 2.1 | | | | |
| | | BYK110 (0/53) | | | 2 | | | |
| | | BYK106 (74/132) | | | | 2.1 | | |
| | Anti-corrosive pigment | Zinc calcium cyanamide | 16.9 | 16.9 | 15.9 | 16.9 | 16.3 | 17 |
| | Extender pigment | Talc | 16.4 | 16.5 | 15.4 | 16.4 | 15.9 | 16.6 |
| | | Barium sulfate | 12.4 | 12.3 | 11.7 | 12.4 | 11.9 | 12.3 |
| | Coloring pigment | Titanium oxide | 3.3 | 3.2 | 3.1 | 3.3 | 3 | 3.2 |
| | | Carbon black | 0.3 | 0.3 | 0.3 | 0.3 | 0.3 | 0.3 |
| | Sum | | 100 | 100 | 100 | 100 | 100 | 100 |
| Solid content concentration (mass%) | | | 85 | 85 | 80 | 85 | 80 | 85 |
| Thermosetting resin in solid content (mass%) | | | 34 | 34 | 34 | 34 | 35 | 34 |
| Pigment in solid content (mass%) | | | 58 | 58 | 58 | 58 | 60 | 58 |
| Dispersant in solid content (mass%) | | | 2 | 2 | 2 | 2 | 0 | 2 |
| Evaluation | Viscosity (*1) | | Good | Good | No good | No good | No good | Good |
| | Appearance of coating film (*2) | | No good | Good | Good | Good | No good | Good |
| | Hydrochloric acid test (1) | No copper protective film | Pass | Pass | Pass | Pass | Pass | Pass |
| | Hydrochloric acid test (2) | No copper protective film | Fail | Pass | Fail | Fail | Fail | Pass |

| | | | | | | | | |
|---|---|---|---|---|---|---|---|---|
| *: The numerical values in brackets after an abbreviation of the dispersant are the amine value on the left hand side and the acid value on the right hand side. *1: With respect to the viscosity, a case where the viscosity rapidly increases in one hour after the preparation was judged to be "no good". *2: With respect to the appearance of coating film, one with remarkable surface roughness, or one having a local thickness non-uniformity was judged to be "no good". | | | | | | | | |

**TABLE 6**

| Examples | | | 29 | 30 | 31 | 32 |
|---|---|---|---|---|---|---|
| | Solvent | MIBK | 15.1 | 14.9 | 15.1 | 15.1 |
| | Epoxy resin | jER828 | 27.4 | 27.5 | 27.4 | 27.4 |
| | Curing agent | SDH | | | | |
| | | ADH | 1.8 | 1.8 | 1.8 | 1.8 |
| | Reactive diluent | DY-T | 1.3 | 1.3 | 1.3 | 1.3 |
| | Curing accelerator | DBTDL | | | | |
| | | UR500 | 1.4 | 1.4 | 1.4 | 1.4 |
| | | 2E4MZ | | | | |
| Composition ratio (mass%) | | IBMI-12 | 1.6 | 1.6 | 1.6 | 1.6 |
| | Dispersant* | BYK-116 (65/0) | | | | |
| | | BYK-2163 (10/0) | 2.1 | | | |
| | | BYK-2155 (48/0) | | 2.1 | | |
| | | BYK-110 (0/53) | | | 2.1 | |
| | | BYK-106 (74/132) | | | | 2.1 |
| | Anti-corrosive pigment | Zinc calcium cyanamide | 16.9 | 17 | 16.9 | 16.9 |
| | Extender pigment | Talc | 16.4 | 16.6 | 16.4 | 16.4 |
| | | Barium sulfate | 12.4 | 12.3 | 12.4 | 12.4 |
| | Coloring pigment | Titanium oxide | 3.3 | 3.2 | 3.3 | 3.3 |
| | | Carbon black | 0.3 | 0.3 | 0.3 | 0.3 |
| | Sum | | 100 | 100 | 100 | 100 |
| Solid content concentration (mass%) | | | 85 | 85 | 85 | 85 |
| Thermosetting resin in solid content (mass%) | | | 34 | 34 | 34 | 34 |
| Pigment in solid content (mass%) | | | 58 | 58 | 58 | 58 |
| Dispersant in solid content (mass%) | | | 2 | 2 | 2 | 2 |
| Evaluation | Viscosity (*1) | | Good | Good | Good | Good |
| | Appearance of coating film (*2) | | Good | Good | Good | Good |
| | Hydrochloric acid test (1) | No copper protective film | Pass | Pass | Pass | Pass |
| | Hydrochloric acid test (2) | No copper protective film | Fail | Pass | Fail | Fail |

| | | | | | | |
|---|---|---|---|---|---|---|
| *: The numerical values in brackets after an abbreviation of the dispersant are the amine value on the left hand side and the acid value on the right hand side. *1: With respect to the viscosity, a case where the viscosity rapidly increases in one hour after the preparation was judged to be "no good". *2: With respect to the appearance of coating film, one with remarkable surface roughness, or one having a local thickness non-uniformity was judged to be "no good". | | | | | | |

Abbreviations and compounds in the Tables are as follows.
MIBK: methyl isobutyl ketone
jER828: bisphenol A-type epoxy resin, jER828, manufactured by Japan Epoxy Resins Co., Ltd.
SDH: sebacic acid dihydrazide, manufactured by NIHON FINECHEMICAL Co., Ltd.
ADH: adipic acid dihydrazide, manufactured by NIHON FINECHEMICAL Co., Ltd.
DICY: dicyandiamide, Dyhard (registered trademark) 100SF, manufactured by SKW Trostberg AG
DY-T: trimethylolpropane triglycidyl ether, Araldite (registered trademark) DY-T, manufactured by Ciba Specialty Chemicals
DBTDL: dibutyltin dilaurate
UR500: urea type curing accelerator, Dyhard (registered trademark) UR500, manufactured by SKW Trostberg AG
2E4MZ: 2-ethyl-4-methylimidazole, manufactured by SHIKOKU CHEMICALS CORPORATION
IBMI-12: 1-isobutyl-2-methylimidazole, manufactured by SHIKOKU CHEMICALS CORPORATION
BYK167: DISPERBYK (registered trademark)-167 manufactured by BYK (amine value: 13 mgKOH/g, acid value: 0 mgKOH/g, block copolymer)
BYK116: DISPERBYK (registered trademark)-116 manufactured by BYK (amine value: 65 mgKOH/g, acid value: 0 mgKOH/g, acrylic type copolymer)
BYK2163: DISPERBYK (registered trademark)-2163 manufactured by BYK (amine value: 10 mgKOH/g, acid value: 0 mgKOH/g, block copolymer)
BYK2164: DISPERBYK (registered trademark)-2164 manufactured by BYK (amine value: 14 mgKOH/g, acid value: 0 mgKOH/g, block copolymer)
BYK2155: DISPERBYK (registered trademark)-2155 manufactured by BYK (amine value: 48 mgKOH/g, acid value: 0 mgKOH/g, block copolymer)
BYK163: DISPERBYK (registered trademark)-163 manufactured by BYK (amine value: 10 mgKOH/g, acid value: 0 mgKOH/g, block copolymer)
BYK164: DISPERBYK (registered trademark)-164 manufactured by BYK (amine value: 18 mgKOH/g, acid value: 0 mgKOH/g, block copolymer)
BYK110: DISPERBYK (registered trademark)-110 manufactured by BYK (amine value: 0 mgKOH/g, acid value: 53 mgKOH/g, copolymer having acid groups)
BYK106: DISPERBYK (registered trademark)-106 manufactured by BYK (amine value: 74 mgKOH/g, acid value: 132 mgKOH/g, polymer salt having acid groups)
Zinc calcium cyanamide: ZK-S2 manufactured by Kikuchi Color and Chemicals Corporation
Talc: SG-95, manufactured by Nippon Talc Co., Ltd.
Barium sulfate: W-10 manufactured by TAKEHARA KAGAKU KOGYO CO., LTD.
Titanium oxide: R-650 manufactured by SAKAI CHEMICAL INDUSTRY CO., LTD.
Carbon black: CP carbon black manufactured by Sigma Aldrich Japan K.K.

The mirrors in Examples 2 to 10, 12, 18, 20, 22, 24, 28 and 30 were excellent in acid resistance, since the back coating composition contained the specific amino group-containing polymer (BYK116, BYK2155). Especially in Example 10, wherein BYK116 and BYK2155 were used in combination, peeling of the film by erosion from the cut surface was minimum.

The mirrors in Examples 1, 11, 13 to 16, 17, 19, 21, 23, 25 to 27, 29, 31 and 32 were inferior in the acid resistance, since the back coating composition did not contain the specific amino group-containing polymer.

The mirror of the present invention is excellent particularly in acid resistance and thus is useful as a mirror to be installed in a bathroom, a restroom, a lavatory, etc.

### REFERENCE SYMBOLS

- 10:: Mirror
- 11:: Glass substrate
- 12:: Silver mirror film (metal film)
- 13:: Metal protective film (metal film)
- 14:: Back coating film

## Claims

1. A back coating composition for forming a back coating film on the back side of a mirror, which comprises a thermosetting resin, a pigment and a dispersant, wherein as the dispersant, an amino group-containing polymer having an amine value of at least 20 mgKOH/g and having no acid group, is contained, wherein the amine value is a value which is measured by JIS K7237,
the acid value is a value which is measured by JIS K2501, and
the acid value of the amino group-containing polymer is 0 mgKOH/g, and wherein as the thermosetting resin, an epoxy resin is contained, and further, as a curing agent for the epoxy resin, an amine-type curing agent is contained.

2. The back coating composition according to Claim 1, wherein as the dispersant, an amino group-containing polymer having an amine value of from 20 mgKOH/g to 70 mgKOH/g and having no acid group, is contained.

3. The back coating composition according to Claim 1 or 2, wherein as the dispersant, an amino group-containing polymer having an amine value of from 20 mgKOH/g to 70 mgKOH/g and having no acid group, is contained in an amount of from 20 to 100 mass%.

4. The back coating composition according to any one of Claims 1 to 3, wherein in the solid content of the back coating composition obtainable by excluding a solvent from the back coating composition, the proportion of the thermosetting resin is from 30 to 50 mass%, the proportion of the pigment is from 50 to 70 mass%, and the proportion of the dispersant is from 1 to 13 mass%.

5. The back coating composition according to any one of Claims 1 to 4, wherein as the pigment, an extender pigment is contained.

6. The back coating composition according to any one of Claims 1 to 4, wherein as the pigment, an anti-corrosive pigment is contained.

7. A mirror comprising a glass substrate, a metal film formed on the glass substrate, and a back coating film formed on the metal film by using the back coating composition as defined in any one of Claims 1 to 6.

8. The mirror according to Claim 7, wherein the metal film consists of a silver mirror film formed on the glass substrate and a metal protective film formed on the silver mirror film.

9. The mirror according to Claim 7, wherein the metal film is a silver mirror film formed on the glass substrate.

## Patentansprüche

1. Rückseitenbeschichtungszusammensetzung zum Bilden eines Rückseitenbeschichtungsfilms auf der Rückseite eines Spiegels, welche ein wärmehärtendes Harz, ein Pigment und ein Dispersionsmittel umfasst, wobei als das Dispersionsmittel ein aminogruppehaltiges Polymer mit einem Aminwert von mindestens 20 mgKOH/g und ohne Säuregruppe enthalten ist, wobei der Aminwert ein Wert ist, welcher mittels JIS K7237 gemessen wird,
der Säurewert ein Wert ist, welcher mittels JIS K2501 gemessen wird, und
der Säurewert des aminogruppehaltigen Polymers 0 mgKOH/g beträgt und wobei als das wärmehärtende Harz ein Epoxyharz enthalten ist und weiter als ein Härtungsmittel für das Epoxyharz ein aminartiges Härtungsmittel enthalten ist.

2. Rückseitenbeschichtungszusammensetzung nach Anspruch 1, wobei als das Dispersionsmittel ein aminogruppehaltiges Polymer mit einem Aminwert von 20 mgKOH/g bis 70 mgKOH/g und ohne Säuregruppe enthalten ist.

3. Rückseitenbeschichtungszusammensetzung nach Anspruch 1 oder 2, wobei als das Dispersionsmittel ein aminogruppehaltiges Polymer mit einem Aminwert von 20 mgKOH/g bis 70 mgKOH/g und ohne Säuregruppe in einer Menge von 20 bis 100 Massen-% enthalten ist.

4. Rückseitenbeschichtungszusammensetzung nach einem der Ansprüche 1 bis 3, wobei in dem Feststoffgehalt der Rückseitenbeschichtungszusammensetzung, erhältlich durch Ausschließen eines Lösungsmittels von der Rückseitenbeschichtungszusammensetzung, der Anteil des wärmehärtenden Harzes von 30 bis 50 Massen-% beträgt, der Anteil des Pigments von 50 bis 70 Massen-% beträgt und der Anteil des Dispersionsmittels von 1 bis 13 Massen-% beträgt.

5. Rückseitenbeschichtungszusammensetzung nach einem der Ansprüche 1 bis 4, wobei als das Pigment ein Füllpigment enthalten ist.

6. Rückseitenbeschichtungszusammensetzung nach einem der Ansprüche 1 bis 4, wobei als das Pigment ein anti-korrosives Pigment enthalten ist.

7. Spiegel, umfassend ein Glassubstrat, einen Metallfilm, gebildet auf dem Glassubstrat, und einen Rückseitenbeschichtungsfilm, gebildet auf dem Metallfilm, unter Verwendung der Rückseitenbeschichtungszusammensetzung nach einem der Ansprüche 1 bis 6.

8. Spiegel nach Anspruch 7, wobei der Metallfilm aus einem Silberspiegelfilm, gebildet auf dem Glassubstrat, und einem Metallschutzfilm, gebildet auf dem Silberspiegelfilm, besteht.

9. Spiegel nach Anspruch 7, wobei der Metallfilm ein Silberspiegelfilm, gebildet auf dem Glassubstrat, ist.

## Revendications

1. Composition de revêtement d'envers pour former un film de revêtement d'envers sur le côté d'envers d'un miroir, qui comprend une résine thermodurcissable, un pigment et un dispersant, dans laquelle, en tant que dispersant, est présent un polymère contenant un groupe amino présentant un indice d'amine d'au moins 20 mg KOH/g et ne contenant pas de groupe acide, dans laquelle
l'indice d'amine est une valeur qui est mesurée conformément à la norme JIS K7237,
l'indice d'acide est une valeur qui est mesurée conformément à la norme JIS K2501, et
l'indice d'acide du polymère contenant un groupe amino est de 0 mg KOH/g, et dans laquelle, en tant que résine thermodurcissable; est présente une résine époxy, et en outre, en tant qu'agent durcisseur pour la résine époxy, est présent un agent durcisseur de type amine.

2. Composition de revêtement d'envers selon la revendication 1, dans laquelle, en tant que dispersant, est présent un polymère contenant un groupe amino présentant un indice d'amine de 20 mg KOH/g à 70 mg KOH/g et ne possédant pas de groupe acide.

3. Composition de revêtement d'envers selon la revendication 1 ou 2, dans laquelle, en tant que dispersant, est présent en une quantité de 20 à 100 % en masse un polymère contenant un groupe amino présentant un indice d'amine de 20 mg KOH/g à 70 mg KOH/g et ne contenant pas de groupe acide.

4. Composition de revêtement d'envers selon l'une quelconque des revendications 1 à 3, dans laquelle, dans la teneur en extrait sec de la composition de revêtement d'envers pouvant être obtenue par exclusion d'un solvant dans la composition de revêtement d'envers, la proportion de la résine thermodurcissable est de 30 à 50 % en masse, la proportion du pigment est de 50 à 70 % en masse, et la proportion du dispersant est de 1 à 13 % en masse.

5. Composition de revêtement d'envers selon l'une quelconque des revendications 1 à 4, dans laquelle, en tant que pigment, est présent un pigment de charge.

6. Composition de revêtement d'envers selon l'une quelconque des revendications 1 à 4, dans laquelle, en tant que pigment, est présent un pigment anticorrosif.

7. Miroir comprenant un substrat en verre, un film métallique formé sur le substrat en verre, et un film de revêtement d'envers formé sur le film métallique par utilisation de la composition de revêtement d'envers telle que définie dans l'une quelconque des revendications 1 à 6.

8. Miroir selon la revendication 7, dans lequel le film métallique est constitué d'un film miroir en argent formé sur le substrat en verre et d'un film protecteur métallique formé sur le film miroir en verre.

9. Miroir selon la revendication 7, dans lequel le film métallique est un film miroir en argent formé sur le substrat en verre.
